# EUROPEAN PATENT APPLICATION

(11) **EP 1 983 430 A1**
(43) Date of publication of application: **22.10.2008**
(21) Application number: 08159559.7
(22) Date of filing: 24.02.2006
(51) Int. Cl.: G06F 9/445

(54) **System and method for managing applications on a computing device having limited storage space**

(62) Divisional of application: 06110420.4
(71) Applicant: Research In Motion Limited, Waterloo, Ontario N2L 3W8 (CA)
(72) Inventor: Hardy, Michael Thomas, Waterloo Ontario N2T 2J8 (CA)
(74) Representative: Rickard, David John

(57) **Abstract**

A device and method are provided for managing applications stored on a wireless device having limited storage space, wherein each application includes one or more components. Predefined criteria for each component are monitored. A trigger is generated in response to a trigger event. Components to be deleted are selected in response to the trigger in accordance with the predefined criteria. Further, there is provided a method for providing access to a component of an application for execution on a wireless device having limited available storage space. A visual representation of the component is provided for presentation to a user. A user request for accessing the component is facilitated via its visual representation. The component is wirelessly retrieved from a data source in response to the user request. The component is installed on the wireless device.

## Description

The description relates generally to device management, and specifically to a system and method for managing applications on devices that have limited storage space.

Miniaturization within the computing industry has led to the success of portable computers. Laptop, or notebook, computers have become increasingly small in size and lightweight. However, even laptop computers became too cumbersome for everyday portable computer access. Accordingly, portable digital assistants (PDAs) were introduced that provided computing functionality in a form factor sufficiently small that it was easy for a user to carry around.

A subsequent advancement of the wireless industry led to PDAs that provide wireless access to the telecommunication infrastructure. Accordingly, many of today's PDAs can facilitate both voice and data communication. The convergence of portable computing devices and telecommunication devices has led to a number of mobile devices that are available to consumers today. Such mobile devices include PDAs, paging devices, smartphones and the like.

However, the drive to portability and a reduced form factor have introduced a number of limitations on the mobile devices. For example, mobile devices generally have limited storage space available for applications and data. As applications for mobile devices become more sophisticated and complex they inevitably take up more space thus reducing the amount of space available for other applications and data.

EP 1 164 476 A2 issued to Kishimoto et al. discloses an information processing apparatus with a storage means for storing application programs. When there is insufficient storage space in the storage means for installing a new application program downloaded from an external server, an existing application program or a data file stored in the storage means is transferred to a server or an external recording medium in order to provide space for the new application. Thus, the programs with the smallest activation count (based on an activation history table maintained for each program) are transferred from the storage means to the server until sufficient storage area becomes available for the new application. Once execution of the new application is completed, then the application program or data file which was transferred is transferred back to the storage means. However, the new application is deleted.

WO 02/01319 A issued to Diaz et al discloses optimizing memory usage in a wireless device by monitoring usage of software features and deleting underutilized or undesirable features from the memory thereby freeing the memory space for additional features. Based on the utilization of the feature, the device determines whether the feature should be deleted. If the feature should be deleted, the software code for execution of the feature and menu items associated with the feature are deleted from the electronic device. In this case, once the software code and the menu items associated with the feature are deleted, it is not apparent how the feature would be recoverable upon user request.

WO 2004/010306 A issued to Klassen et al teaches storing data associated with a plurality of software applications onto different data storage locations of a wireless device. Klassen further teaches a data store management system for accessing and deleting at least some of the stored data in the plurality of data storage locations if there is insufficient memory space available in at least one of the accessed data storage locations. However, Klassen focuses on deleting different types of data associated with a software application but not components or features of an application program and it does not teach how the data associated with the software applications would be recoverable if the user requested it.

US2003/032417 discloses a method for managing the deleting and reloading of software application components on a wireless device, such as a cellular telephone, personal digital assistant, pager, or other computer platform. The wireless device has one or more resident executable software applications wherein each application has one or more application components and application-associated data, such as software licenses and user-specific data. The wireless device selectively deletes one or more application components of the resident software applications without loss of the application-associated data to clear resources on the wireless device, and selectively prompts an application download server across a wireless network to transmit deleted application components needed to be reinstalled on the wireless device to execute the application.

Accordingly, there is a need for mobile device that efficiently utilizes its limited storage space and obviates or mitigates at least some of the disadvantages described above.

### GENERAL

In accordance with an aspect of the present invention there is preferably provided a method for managing applications stored on a wireless device having limited storage space, each application including one or more components, the method comprising the steps of monitoring predefined criteria for each component; generating a trigger in response to a trigger event; and selecting components to be deleted in response to the trigger in accordance with the predefined criteria.

The predefined criteria may comprise timing information identifying when the component was last accessed and/or frequency information identifying how often the component has been accessed.

The trigger event may be a predefined amount of available storage space and the trigger may be generated when the actual amount of available storage space decreases below the predefined amount of available storage space.

The trigger event may be a predefined duration of time and the trigger may be generated when a duration of time in which a component was last accessed exceeds the predefined duration of time.

The components may be automatically deleted.

The components may be presented to a user and the user may decide whether or not to delete the components.

The user may be provided with a list of possible components to delete.

The method may further comprise the steps of: receiving a request to access a desired component not stored on the device; wirelessly contacting a server for requesting the desired component; downloading and installing the desired component so that it can be accessed.

The components not stored on the device may be represented to a user differently from components stored on the device.

The step of requesting the desired component may comprise transmitting user data to the server.

The user data may comprise security information and/or user credentials.

In accordance with a further aspect of the invention there is preferably provided a wireless device configured to manage applications, each application including one or more components, the wireless device comprising: an application monitor configure to monitor predefined criteria for each component; a trigger generator configured to generate a trigger in response to a trigger event; and a component remover configured to select components to be deleted in response to the trigger in accordance with the predefined criteria.

In accordance with yet a further aspect of the invention there is preferably provided a method for providing access to a component of an application for execution on a wireless device having limited available storage space, the method comprising the steps of: providing a visual representation of the component for presentation to a user; facilitating a user request for accessing the component via its visual representation; wirelessly retrieving the component from a data source in response to the user request; and installing the component on the wireless device.

In accordance with yet a further aspect of the invention there is preferably provided a computer readable medium comprising instructions for implementing one or more of the aspects of the invention as described above.

### BRIEF DESCRIPTION OF THE DRAWINGS

Embodiments of the invention will now be described by way of example only with reference to the following drawings in which:
**Figure 1** is a state of the art telecommunication network;
**Figure 2** is a block diagram of a wireless communication device;
**Figure 3** is a flow chart illustrating the operation of the wireless communication device illustrated in Figure 2; and
**Figure 4** is a block diagram of an alternate embodiment of the wireless communication device illustrated in Figure 2.

### DESCRIPTION OF PREFERRED EMBODIMENTS

In order to install software on a typical mobile device, a user must either use a desktop computer and install all of a required application and its corresponding features or use a browser to navigate to a known website and download the application manually. Additionally, users of mobile devices are typically responsible for manually removing the application from the device when they no longer want or need it.

In accordance with embodiments of the invention, a mechanism is provided that facilitates removal of an application, or features thereof, automatically after a period of time, if they have not been used, or when space is needed for more data storage.

Further, a mechanism is provided wherein an application, or features of an application, can be wirelessly installed automatically when a user attempts to access the feature or application.

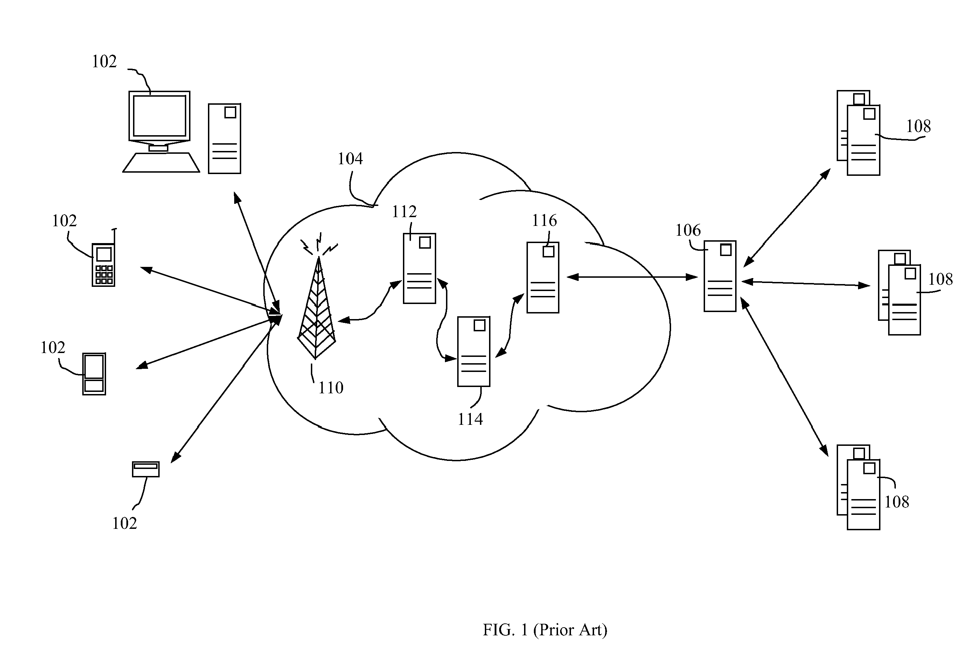

For convenience, like numerals in the description refer to like structures in the drawings. Referring to Figure 1, a state of the art communication infrastructure is illustrated generally by numeral 100. The communication infrastructure 100 comprises a plurality of communication devices 102, a communication network 104, a gateway 106, and a plurality of backend servers 108.

The communication devices 102, or simply devices 102, include any portable device such as a laptop or mobile computer, a smart phone, a personal digital assistant, such as a Blackberry^{™} by Research in Motion or a Treo^{™} by Palm for example, and the like. The mobile devices 102 are in communication with the gateway 106 via the communication network 104.

Accordingly, the communication network 104 may include several components such as a wireless network 110, a relay 112, a corporate server 114 and/or a mobile data server (MDS) 116 for relaying messages between the devices 102 and the gateway 106. The gateway 106 is further in communication with a plurality of the backend servers 108. The types of backend servers 108 and their corresponding links will be apparent to a person of ordinary skill in the art. It will also be apparent to a person of ordinary skill in the art that the communication network 104 can be configured to operate one or both of a data-push environment or a data-pull environment.

In the present embodiment, the MDS 116 provides a platform for mobile applications running on wireless, packet-data networks by providing a secure gateway between the wireless network, corporate intranets and the Internet. Further, in the present embodiment the MDS operates as part of the corporate server 114. An example of a corporate server 114 is the Blackberry Enterprise Server provided by Research in Motion. The corporate server 114 provides functions for enabling wireless applications, including network connectivity, encryption, data transcoding, and push support.

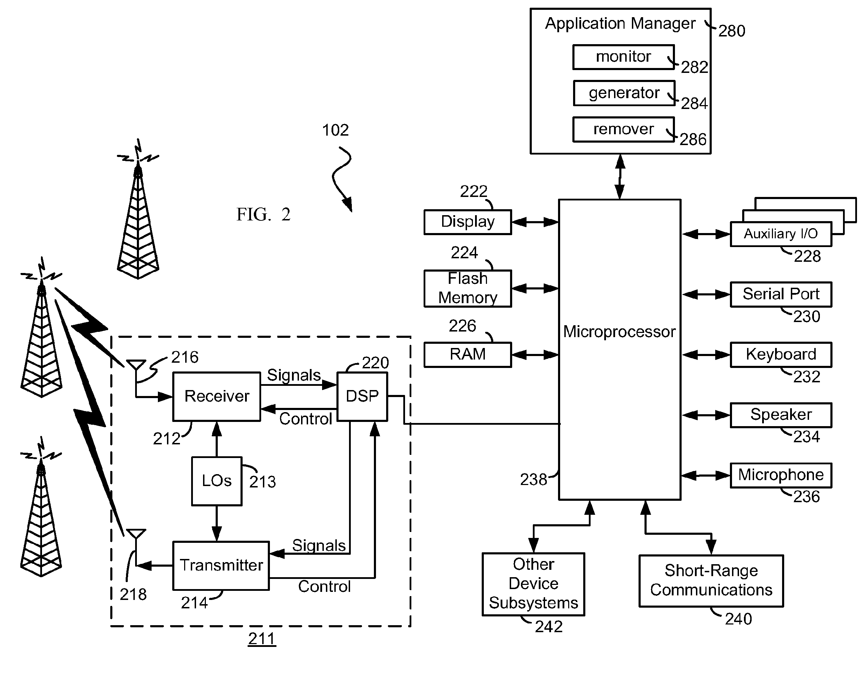

Referring to Figure 2, components of the device 102 are illustrated. The device 102 is preferably a two-way communication device having at least voice and data communication capabilities, including the capability to communicate with other computer systems. Depending on the functionality provided by the device 102, it may be referred to as a data messaging device, a two-way pager, a cellular telephone with data messaging capabilities, a wireless Internet appliance, or a data communication device (with or without telephony capabilities).

The device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which mobile device 102 is intended to operate.

The device 102 includes a microprocessor 238 which controls general operation of the device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth^{™} for example, and any other device subsystems or peripheral devices generally designated at 242. Operating system software used by the microprocessor 238 is preferably stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, preferably enables execution of software applications on the device 102. A predetermined set of applications which control basic device operations, typically including data and voice communication applications, is installed on the device 102 during its manufacture. Additionally, applications may also be loaded onto the device 102 through the network 104, an auxiliary I/O subsystem 228, serial port 230, short-range communications subsystem 240, or any other suitable subsystem 242, and installed by a user in RAM 226 or preferably a non-volatile store (not shown) for execution by the microprocessor 238. Such flexibility in application installation increases the functionality of the device 102 and may provide enhanced on-device features, communication-related features, or both.

The more feature-rich an application is, the more likely it is that the application contains features that are not desirable to all users. The state of the art approach to providing applications for mobile devices is an "all or nothing" approach. That is, even if an application contains features that are not desirable to a user, when the application is loaded onto the device 102, all of the application features are included. Unfortunately, such an approach can cause storage concerns as the application consumes valuable storage space on the device.

Therefore, in accordance with an embodiment of the present invention, the device 102 is further provided with an application manager 280. The application manager 280 is typically a software solution that is included as part of the operating system or as an application. The application manager 280 includes an application monitor 282, a trigger generator 284 and a component remover 286.

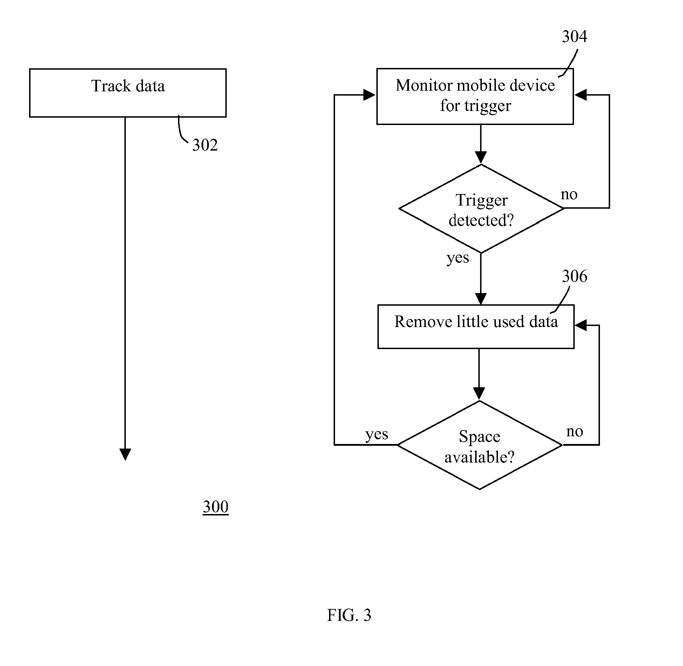

Referring to Figure 3, a flow chart illustrating the general operation of the application manager 280 is illustrated generally by numeral 300. In step 302, the application monitor 282 tracks usage of applications as well as features within those applications. Thus, the application monitor 282 maintains data relating to the dates and/or times that application components were last accessed by the user as well as the frequency with which they have been accessed. In the present embodiment, the application monitor 282 monitors the components of all applications on the mobile device 102.

For the purpose of this description, an application component, or simply component, is defined as a feature of an application that can be removed without affecting the general operation of the application. Some applications, typically smaller applications, may comprise only one component. Other applications, typically larger applications, may comprise a number of components in the form of features, plug-ins and the like. It will be appreciated by a person of ordinary skill in the art that different programming techniques may be used to provide components for an application without affecting the scope of the invention.

In step 304, concurrently with step 302, the trigger generator 284 monitors the mobile device 102 for a predefined event and generates a trigger if the event is realized.
In the present embodiment, the event is the reduction of available storage space on the mobile device 102 below a predefined threshold. The trigger generator 284 monitors storage capacity on the mobile device 102 available for storing applications and data. When the amount of available storage capacity falls below a predefined threshold, the trigger generator 284 generates the trigger.

It will be appreciated that the predefined threshold can be defined by one or more of a device manufacturer, device distributor, corporate policy or user preferences, depending on the implementation. Optionally, the predefined threshold may be overridden by a downstream user. For example, the user may be able to override the predefined limited defined by the corporate policy, which may be able to override the predefined limited defined by the device distributor, who may be able to override the predefined limited defined by the device manufacturer.

Also, in the present embodiment the predefined threshold is set to a predefined value. That is, for example, the predefined threshold can be a specific amount of space or a percentage of total available space. The trigger is generated when the available storage space becomes less than the predefined threshold.

Once the trigger is generated, the operation continues at step 306. In step 306, the component remover 286 removes applications and/or components in accordance with the gathered application usage information and preset user preferences. That is, the user can assign different priority to different criteria. For example, the user can determine whether frequency of use or last use date of a component should be weighted more heavily. If the user does not define specific criteria, default criteria are used.

In the present embodiment, the component remover 286 automatically determines which of components to delete and presents the user with a dialog or other input request mechanism for confirmation. The information displayed to the user is typically sufficient to identify the component, but may also include information such as a brief description of the component as well as the last time the component was used and how often the component was accessed.

If the user chooses to delete the component, the component remover automatically deletes it from the device 102. If the user chooses not to delete the component, the component that next most closely meets the criteria is suggested for deletion. This process continues iteratively until a component has been deleted.

If the deletion of the component is sufficient such that the available storage space become greater than the predefined threshold, the program returns to step 302. Otherwise, the component remover 286 continues to suggest and delete components until sufficient storage space becomes available.

If the user chooses to delete none of the suggested components, or too few of the suggested components to avail the required storage space, a warning is displayed to the user that the storage space available on the device 102 is low.

An example of how the operation described above would work on the mobile device 102 is provided as follows. Many devices 102 are configured with an address book application to store/manage a user's contact information. In some implementations, the address book includes a global address lookup (GAL) component. The GAL component is particularly useful for users who are part of a corporate entity because it provides access to a corporate contact database. Therefore, if the user wants to send an electronic mail (e-mail) message to a person not in their local address book, the GAL component is invoked and is used to communicate with the corporate contact database to determine if that person's information is stored therein.

However, if a person using the device is not part of a corporate entity, the GAL component may never be invoked since there may not be a corporate contact database to access. Similarly, a person with a complete local contact database may not need to invoke the GAL component.

Accordingly, the fact that the GAL component is not used is realized by the application monitor 282. If the trigger detector 284 detects the predefined event, which in the present embodiment is a limitation of available space, the trigger is generated. In response to the trigger, the application remover 286 determines that the GAL component has never been used, and presents the user with the option to delete it from the device 102. Since the user has never used the GAL component, it is likely that the request for deletion will be approved and the GAL component is automatically removed from the device 102. If, however, the user does not wish to delete the GAL component, another infrequently used component is presented to the user and the operation continues as will be appreciated by a person of ordinary skill in the art.

Although the embodiment described above refers to the trigger causing event as the amount of available space remaining on the mobile device 102, this need not be the case. For example, in an alternate embodiment, the trigger causing event is the length of time a component has not been used. In such an embodiment, a predefined duration of time is established as the threshold. When the time for which a component has not been accessed exceeds the threshold, the trigger generator 284 generates the trigger. Similarly to the previous embodiment, the user is presented with a dialog requesting confirmation that the component is to be deleted. If the user accepts the suggestions, the component is deleted from the device 102. Otherwise, the component is not deleted.

However, unlike the previous embodiment, since there is no specific need to delete a component, the component remover 286 does not need to suggest another component to delete. Rather, a component that is not deleted is tagged with an identifier that indicates that the user chose not to delete the component. The identifier is used to inhibit the trigger generator 284 from continually suggesting deletion of the component.

Depending on predefined settings, the identifier provides the component with an additional duration of time before generating another trigger. Accordingly, the identifier typically includes a date/time stamp or the like. Alternatively, rather than use an identifier, the application remover 286 may communicate directly with the application monitor 282 and manipulate the access date and time information for the component to provide an additional duration of time before generating the next trigger.

In the previous embodiments, the threshold for generating the trigger is generally set at a predefined value. However, it will be appreciated that the predefined threshold can be relative. An example of a relative threshold is a lack of space required to install a new application. That is, when the user attempts to install a new application the application manager 280 determines whether or not there is sufficient space available to install the desired application. If there is insufficient space, the trigger generator 284 generates the trigger. Therefore the trigger is generated relative to the amount of space required.

In yet an alternate embodiment, in addition to deleting components from the mobile device 102, the application monitor 280 can monitor and delete stale data. As will be appreciated by a person of ordinary skill in the art, such data may include one or more of application data, temporary data, data marked to be deleted and the like.

Yet further, although the previous embodiments are described as presenting the user with single data at a time for deletion, in an alternate embodiment the user is present with a plurality of possible data to delete. For example, the application manager 280 may select the top five components that meet the criteria for removal and provide the information to the user. The user can selected one or more of the components on the list for removal.

The previous embodiments have been described as presenting the user of the device 102 with a dialog to confirm deletion of data and/or components before the deletion is performed. However, the application manager 280 can be configured to delete the data without prompting the user. This option can be determined by the manufacturer, distributor, corporate entity and/or user settings.

Yet further, in an alternate embodiment some components and/or data can be designated a special status. Such components and/or data would be exempt from being removed by the application manager 280. The application monitor 282 may optionally still monitor such components/data, however, the application remover 286 would not remove them, or suggest that they be removed, upon detection of the trigger by the trigger detector 284.

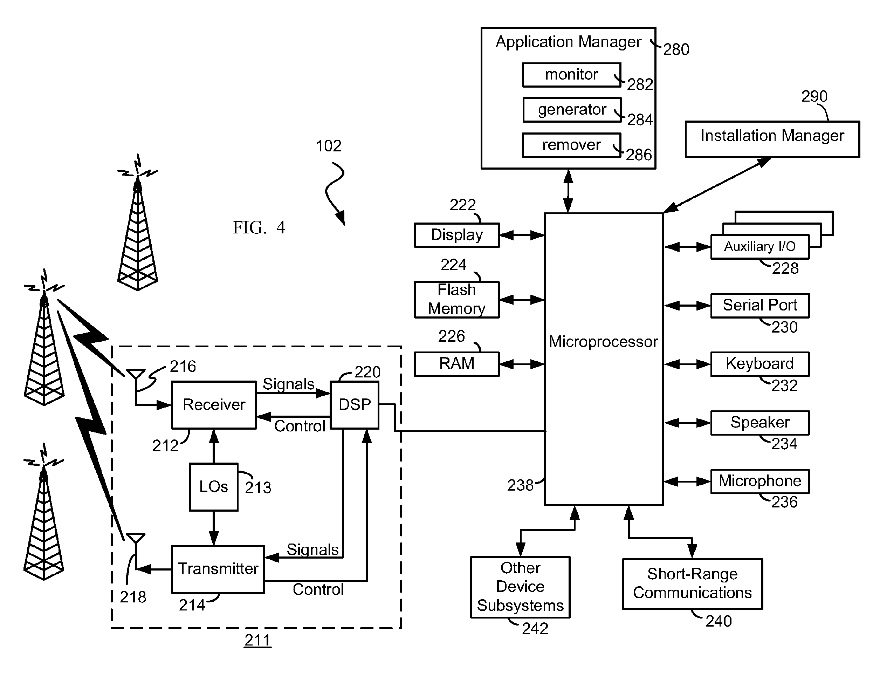

Referring to Figure 4, yet a further embodiment of a wireless device 102 is illustrated. The wireless device 102 of the present embodiment is similar to the wireless device 102 illustrated in Figure 2, with the addition of an installation manager 290. Such an addition provides a further mechanism for the automatic management of data on the device 102, as described below.

In accordance with the present embodiment, the installation manager 290 automatically retrieves and installs the code necessary to support an application component when a user attempts to access or use the component.

When an application is initially installed on the device, the user is provided with the ability to determine which components of an application are installed on the device 102 via an installation wizard. Alternatively, the wizard may automatically install a predefined set of components along with the application onto the device 102.

Some, if not all, of the components not initially installed on the mobile device 102 are designated as components to be installed "on use". Such applications are retrieved and installed on the device 102 if the user attempts to access them. Thus, if the user attempts to use or access such a component, the installation manager 290 contacts a corresponding application source, typically an application server, and retrieves and installs the desired component. Installation of the component could be performed automatically over the air (OTA) or require that the user connect the device using a cable to a desktop system in order to perform the installation. Sample cables include a serial cable, a Universal Serial Bus (USB) cable and the like. Alternatively, the installation could be scheduled for a later time.

Optionally, the installation manager 290 informs the user that the desired component is being retrieved and allows the user to access other functionality of the device 102 in the interim. The installation manager 290 may also require approval from the user before attempting to retrieve and install the component.

The manner in which "on use" components may be presented to the user can differ depending on the implementation. For example, the "on use" component may appear like other components immediately available to the user. Therefore, the user would not necessarily know which components would require to be downloaded until an attempt is made to access it.

Alternatively, the presentation of the "on use" component may differ from the presentation of other components that are immediately available to the user. For example, if the "on use" component is accessed by clicking on an icon, the appearance of the icon may be modified to differentiate it from other icons, so that it is readily apparent to the user that the component needs to be downloaded. Various modification to other presentation items including menu bars, drop down lists and the like will become apparent to a person of ordinary skill in the art.

The "on use" installation of components can be combined with the automatic component deletion operation to provide a useful device management tool. To exemplify this concept, the previous example of the Global Address Lookup (GAL) component of the address book is continued. If the GAL component is deleted for inactivity, a "Lookup" menu item is still present in the address book user interface. As previously described, it may or may not be presented such that it is readily apparent to the user that the GAL component is not currently installed on the device 102. The next time the "Lookup" menu item is selected, the device displays information indicating that the feature is not currently installed and provides the user with an option to download and install it. If the user accepts the option, the GAL component code is downloaded from a known, possibly configurable, server and automatically installed.

It will be appreciated that the device transmits sufficient information to the server so that the correct version of the software is retrieved. Typically, the device has knowledge of the versions of code files are available on the device.

Additionally, the device is provided with the location of the server required from which to request the relevant code. This location could be provisioned either through an information technology policy, through service books, or through the application itself, as will be appreciated by a person of ordinary skill in the art. Other information such as security information and user credentials may also be included when requesting the component. This will allow the server to confirm that the user has the right to access the requested component. Additionally, it provides the opportunity for a server to charge the user a base fee for an application and separately charge for different components, as desired.

A further advantage of the "on use" installation described herein applies to over the air application updates or installations. That is, for example, when device software is updated over the air at least some of the new application features can be installed "on use" rather than loading all of the new features up front. This partial install reduces the bandwidth required to initially retrieve an application and limits wasting bandwidth for components that may not be used. which is especially useful where bandwidth issues are a concern.

Accordingly, the dependency of the device on the desktop is reduced since software can be deployed automatically over the air. The user can choose to install only the software and features that they currently need, knowing that additional features can be downloaded and installed automatically when needed.

## Claims

1. A method for managing applications stored on a wireless device (102) having limited storage space, each application comprising one or more components, the method comprising the steps of:
monitoring predefined criteria for each component (302), the predefined criteria representing usage of each component;
monitoring for a predefined trigger event;
generating a trigger in response to the trigger event (304);
selecting one or more components to be deleted in response to the trigger in accordance with the predefined criteria;
deleting selected components(306);
reinstalling the deleted components in response to a user request to access the deleted components.

2. The method of claim 1, wherein the predefined criteria comprises timing information identifying when the component was last accessed and/or frequency information identifying how often the component has been accessed.

3. The method of claim 1 or claim 2, wherein the trigger event is a predefined amount of available storage space and the trigger is generated when the actual amount of available storage space decreases below the predefined amount of available storage space.

4. The method of claim 2, wherein the trigger event is a predefined duration of time and the trigger is generated when a duration of time in which a component was last accessed exceeds the predefined duration of time.

5. The method of any preceding claim, wherein the components are automatically deleted.

6. The method of any one of claims 1 to 4, wherein the components are presented to a user and the user decides whether or not to delete the components.

7. The method of claim 6, wherein the user is provided with a list of possible components to delete.

8. The method of any preceding claim, further comprising the steps of:
receiving a request to access a desired component not stored on the device;
wirelessly contacting a server for requesting the desired component;
downloading and installing the desired component so that it can be accessed.

9. The method of claim 8, wherein components not stored on the device are represented to a user differently from components stored on the device.

10. The method of claim 8 or claim 9, wherein the step of requesting the desired component comprises transmitting user data to the server.

11. The method of claim 10, wherein the user data comprises security information and/or user credentials.

12. The method of claim 1, further comprising the steps of:
providing a visual representation of the component for presentation to a user on a display of the wireless device, the visual representation depending on whether or not the component is stored on the device;
facilitating a user request to use the component by selection of its visual representation;
wirelessly retrieving the component from a data source in response to the user request if the component is not already available; and
installing the component on the wireless device (102).

13. The method of claim 12, wherein the visual representation comprises any one or a combination of: an icon, a menu bar, a drop down list or a button.

14. The method of claim 12 or claim 13, further comprising the step of deleting a pre-existing component from the wireless device in order to accommodate the retrieved component.

15. The method of claim 14, wherein the pre-existing component is deleted in accordance with when the component was last accessed or how often the component has been accessed.

16. A wireless device (102) configured to manage applications stored thereon, each application comprising one or more components, the wireless device (102) comprising:
an application monitor (282) configured to monitor predefined criteria for each component, the predefined criteria representing usage of each component;
a trigger detector (284) configured to monitor for a predefined trigger event;
a trigger generator (284) configured to generate a trigger in response to the trigger event;
a component remover (286) configured to select one or more components to be deleted in response to the trigger in accordance with the predefined criteria, the component remover (286) further configured for deleting the selected components; and
an installation manager (290) configured to retrieve and reinstall the deleted components in response to a user request to access the deleted components.

17. A computer readable medium comprising instructions which, when executed on a wireless device (102), will cause the wireless device (102) to manage applications comprising one or more components stored on the device by implementing the steps of the method of any one of claims 1 to 15.
